# EUROPEAN PATENT SPECIFICATION

(11) **EP 2 774 470 B1**
(45) Date of publication and mention of the grant of the patent: **27.03.2019**
(21) Application number: 14158356.7
(22) Date of filing: 07.03.2014
(51) Int. Cl.: A01D 34/67, A01D 34/82

(54) **Lawnmower**
Rasenmäher
Tondeuse à gazon

(30) Priority: 08.03.2013 FR 1352105; 04.06.2013 CN 201310237656
(43) Date of publication of application: 10.09.2014
(73) Proprietor: Castorama France, 59175 Templemars (FR)
(72) Inventor: Gamot, Alban, 59100 ROUBAIX (FR); Dupont, Eric, 59520 MARQUETTE (FR); Urvoy, Damien, 59000 LILLE (FR)
(74) Representative: Cabinet Plasseraud

(56) References cited:
- EP-A2- 1 902 608
- CN-U- 202 232 168
- DE-A1-102004 020 985
- GB-A- 2 386 813
- US-A- 3 702 016
- US-A- 5 803 214

## Description

This invention relates to lawnmowers.

Conventionally, a lawnmower comprises a movable body, for example comprising a hood mounted on wheels or on an air cushion and shrouding the cutting blade, a motor that drives the cutting blade, and possibly other features and accessories.

A lawnmower also conventionally comprises a handle which allows a user to move the movable body. This movement is usually achieved by pushing it along a more or less horizontal, straight or curved path.

However, in the case of a movable body mounted on wheels, the handle is also used as a lever to lift the movable body so that it is supported on a reduced number of wheels, for example to pass over an obstacle or to make a quick turn, for example 180°.

To act as a lever, such a handle is therefore conventionally rather elongated, so that the volume occupied by the lawnmower is fairly significant.

When the lawnmower is not in use and needs to be stored, such a significant volume poses a problem.

It has been proposed, for example in EP 1 543 711, to pivotably mount the handle on the hood so that it can be folded forward to 135° above the hood when in the storage position. In practice, however, this solution is difficult because it requires manual operation of one or two large clamping screws which hold the handle firmly on the hood to ensure the lever effect during usage.

A need therefore exists for a lawnmower which can change easily from a usage configuration to a storage configuration.

US 3,702,016 also describes a storable handle. Further, this document describes an adjustable handle. Having two mechanisms make is however complex for the end-user, and it is witnessed that many end-users don't use the adjustment function (thereby leading to difficult lawn mowing) or the storage function (thereby loading to bulk), because of this complexity.

The invention relates to a lawnmower comprising a movable main body comprising a hood, and a handle that is deployable in a deployment direction relative to the main body between a storage configuration and a usage configuration, a storage locking system which can be alternately placed in an active state in which it prevents the storage of the handle relative to the main body and an inactive state in which it allows such storage, and a user operable storage control system for placing the storage locking system in its inactive state from its active state; wherein said handle comprises a lower portion and an upper portion that is movable relative to the lower portion in an adjustment direction, an adjustment locking system adapted for alternately being placed in an active state in which it secures the lower and upper portions to one another in an adjustment position, and an inactive state in which the lower and upper portions are not secured to one another, and a user operable adjustment control system for placing the adjustment locking system in its inactive state from its active state; and wherein the storage control system comprises the adjustment control system and an actuation part of the upper portion of the handle such that a single control is provided for both the storage and the adjustment.

With these arrangements, one can easily compress the handle into a configuration where it occupies minimal space.

In other aspects, one can alternatively have a lawnmower comprising:
- an adjustment locking system adapted for being in an active state in a plurality of different adjustment positions,
- an adjustment range comprising a retracted position in which the upper portion is retracted inside the lower portion, a deployed position in which the upper portion is almost entirely outside the lower portion, and at least one intermediate adjustment position, said at least one intermediate adjustment position comprising a lowest intermediate adjustment position, closest to the retracted position, the distance between the retracted position and the lowest intermediate position being at least 1.5 times greater than an average distance between the other positions considered adjacent 2 by 2,

- an adjustment control system comprising a control button that is movable on a base and is connected to a transmission element extending to an actuator cooperating with the adjustment locking system,
- the deployment direction is the same as the adjustment direction,
- the deployment and adjustment directions are different,
- the actuation part of the upper portion of the handle comprises an actuation head, arranged at the distal end of the upper portion of the handle, adapted for actuating the storage locking system,
- at least one and preferably each locking system comprises a supporting body mounted in a handle portion end, the supporting body defining an extension channel for a locking pin extending in a direction transverse to the storage direction, a locking pin mounted so as to be movably biased by a spring in the extension channel, each control system comprising a user operable actuator that cooperates with the locking pin in order to move the locking pin in the transverse direction against the bias of the spring,
- the supporting body of the adjustment locking system comprises a distal end adapted for actuating the storage control system,
- the supporting body defines an actuation channel for receiving the actuator, extending in the storage direction and opening into the extension channel, the actuator being mounted so as to be movable within the actuation channel, wherein the distal end of the supporting body of the adjustment locking system is adapted for moving the actuator of the storage control system,
- the hood comprises a guide means cooperating with the lower portion of the handle to guide the storage of the handle relative to the main body in a storage direction,
- the guide means is a guide sleeve adapted for guiding the storage in a translational storage direction,
- the hood comprises a guide plate cooperating with the lower portion of the handle to guide the storage of the handle relative to the main body in a rotational storage direction,
- the guide means is located at the back of the hood, the hood comprises a front support region, and the handle rests on the front support region in the storage configuration,
- the guide means is secured to the hood and fixed to the hood,
- the storage locking system comprises a pocket of the hood adapted for cooperating with a locking pin carried by the handle in the active state of the storage locking system,
- the hood comprises an actuation surface upstream of the pocket in the deployment direction and adapted for moving the locking pin from a deployed position to a retracted position against the action of an elastic biasing member, the elastic biasing member urging the locking pin towards its deployed position in the usage configuration of the handle,
- the handle comprises a tube extending in the storage direction in the usage configuration,
- the movable main body comprises at least three non-aligned points of support defining a plane of movement,
- the storage direction forms an angle of between 20° and 70° relative to the plane of movement,
- the hood has an aperture for discharging cut grass, and the lawnmower additionally comprises a collection bag having an inlet aperture, the inlet aperture facing the aperture for discharging cut grass in the usage configuration of the handle,
- the collection bag is attached to the lower portion of the handle,
- the collection bag is deployable between a deployed state in which it can receive a quantity of cut grass and a folded state in which it cannot receive a quantity of cut grass, and the collection bag is mounted onto the handle, the placement of the handle in its storage configuration from its usage configuration causing the collection bag to change from its deployed state to its folded state,
- the handle comprises a grip, said grip abutting against the hood in the storage configuration.

In another aspect, the invention relates to a lawnmower comprising a movable main body comprising a hood, and a handle that is deployable in a deployment direction relative to the main body between a storage configuration and a usage configuration, a storage locking system which can be alternately placed in an active state in which it prevents storage of the handle relative to the main body and an inactive state in which it allows such storage, and a user operable storage control system for placing the storage locking system in its inactive state from its active state,
the hood comprising a guide sleeve cooperating with the handle to translationally guide the storage of the handle relative to the main body in a storage direction.

The invention will be described below with reference to the figures, in which:
- figure 1 is a schematic view of a lawnmower in the deployed configuration, in a first embodiment,
- figure 2 is a schematic view similar to figure 1, of a lawnmower in a stored configuration,
- figure 3 is a cross-sectional view along the axis of a handle tube, in a deployed configuration of the handle,
- figure 4 is an enlargement of a portion of figure 3,
- figure 5 is an exploded partial perspective view of a second embodiment,
- figure 6 is a cross-sectional view of the locking system for the second embodiment,
- figures 7a to 7c are schematic views illustrating the sequence in retracting the handle onto the hood in a first example embodiment,
- figures 8a to 8c are schematic views illustrating the sequence in retracting the handle onto the hood in a second example embodiment.

In the various figures, the same references are used to denote identical or similar items.

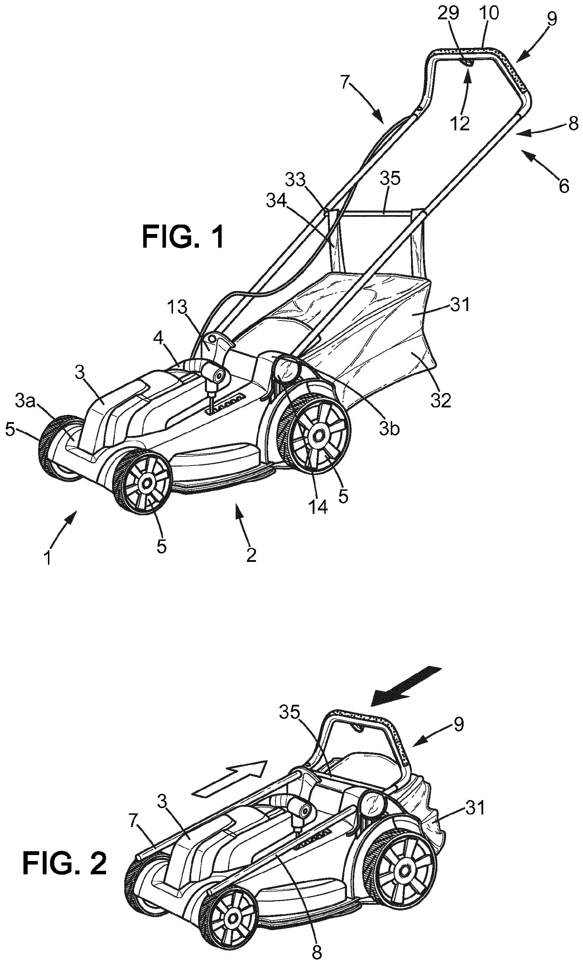

Figure 1 schematically illustrates a lawnmower 1 in a usage configuration, meaning with its handle deployed. The lawnmower 1 conventionally comprises a movable main body 2 which includes a hood 3. The hood 3 serves as a support for certain structural elements of the lawnmower 1. In particular, the hood 3 comprises a deck which allows the rotation of a cutting blade about a substantially vertical axis of rotation. The hood 3 also forms a protective shroud around the cutting blade, so that the blade is not visible or accessible in the usage configuration. The hood 3 forms a support for a drive system 4 for the cutting blade. The drive system 4 for the cutting blade is functionally connected to the cutting blade so that, when the drive system is active, the cutting blade is rotated about the axis of rotation relative to the hood. Such a system is well known and will not be further described here. The drive system can alternate between an active state, described above, and a standby state in which it is on but is not driving the blade. The user can control the passage of the motor from its active state to its standby state. Moreover, the drive system can alternate between its active state or standby state and an off state in which it does not consume energy.

The drive system may be a gas-based system, in which case the hood 3 can comprise a housing for a fuel tank that communicates with the power-drive system. Alternatively, the power-drive system can be an electrical system, in which case the hood 3 can comprise a housing for a battery and/or a cord for connecting to an electrical outlet.

The movable body also comprises wheels. Each wheel 5 is mounted on the hood 3 so as to rotate about a substantially horizontal axis of rotation. For example, the wheels are not directional, and the axes of rotation are parallel. At least three wheels are provided, arranged about the hood and defining a travel plane. A travel plane is defined as being the plane of the ground to be mowed, meaning a substantially horizontal plane.

The lawnmower 1 has a preferred rolling direction. The directions given below will be in reference to this preferred rolling direction. The hood has a front portion 3a and a rear portion 3b relative to the rolling direction. A handle 6 extends from the lawnmower 1 towards the back. Thus the preferred rolling direction is defined as the direction the lawnmower 1 moves when a user advances the lawnmower 1 by pushing on the handle 6. This does not exclude occasionally moving the lawnmower backward by pulling on the handle, or turning it while pushing or lifting it to rest on a reduced number of wheels, etc.

Thus the wheels are arranged so that there is at least one rear wheel, at least one front wheel, and a third wheel which defines a tripod for the hood. Typically, four wheels substantially arranged in a quadrilateral are used.

As indicated above, the lawnmower 1 comprises a handle 6.

In the usage configuration, the handle 6 extends from the lawnmower towards the back. In this configuration, it also extends substantially upwards. It may therefore extend at an oblique angle from the hood in an extension direction.

In the usage configuration, it extends between a first end, connected to the hood, and a second end opposite the first end, at about the height of a user's elbow. The handle may comprise first and second tubular side assemblies 7, 8, symmetrical to each other relative to a vertical midplane comprising the rolling direction and each connected to a side of the hood. For example, one can use tubes which are each contained in a plane. At the upper end of the handle, a crosspiece 9 extends transversely between the two tubular side assemblies and connects them to each other, forming a grip 10 for the user.

In the usage configuration, the handle is connected to the hood such that the user pushing on the handle in the rolling direction causes the lawnmower to move in the rolling direction. A user pressing vertically on the grip 10 causes the hood to pivot on its rear wheels 5, lifting its front wheels.

The handle 6 is made to be deployable relative to the hood 3 between a deployed position represented in figure 1, and a stored position. The lawnmower comprises a storage locking mechanism 11 adapted for locking the handle 6 on the hood 3. More specifically, the locking mechanism 11 can be in an active state, in which the handle and the hood are secured to each other in the usage configuration, and an inactive state, in which the handle and the hood are free to be moved relative to one another. In particular, the handle 6 is translationally movable relative to the hood 3 in a storage direction, from the usage configuration represented in figure 1 to the storage configuration represented in figure 2, when the locking mechanism 11 is in the inactive state. The storage direction extends horizontally or at an angle relative to the horizontal for example of about 10° to 45°. The storage direction is, for example, parallel to the direction in which the handle 6 extends in the usage configuration. A control system 12 can be operated by the user in order to place the locking mechanism from its active state to its inactive state.

The hood 3 comprises a storage guide means. In the specific case presented here, the hood can comprise two side sleeves 13, 14 as the storage guide means, each one cooperating with a respective tubular assembly 7, 8. In the following description, only one of these sides is described, as the other side can be implemented in the same manner.

The sleeve 13 is integrated with the hood 6, for example as a plastic part mechanically assembled or overmolded onto the frame of the hood 6. The sleeve comprises a body defining an internal cylindrical opening which establishes the storage direction. This is a cylindrical opening having a transverse cross-section complementary to the transverse cross-section of the associated tubular assembly 7.

The tubular assembly 7 comprises a tube 15 which here will be described as a lower tube, in relation to the adjustment system described below. However, as a variant, the tubular assembly 7 could consist of a single tube 15 or of a plurality of tubes which can be or which are secured together.

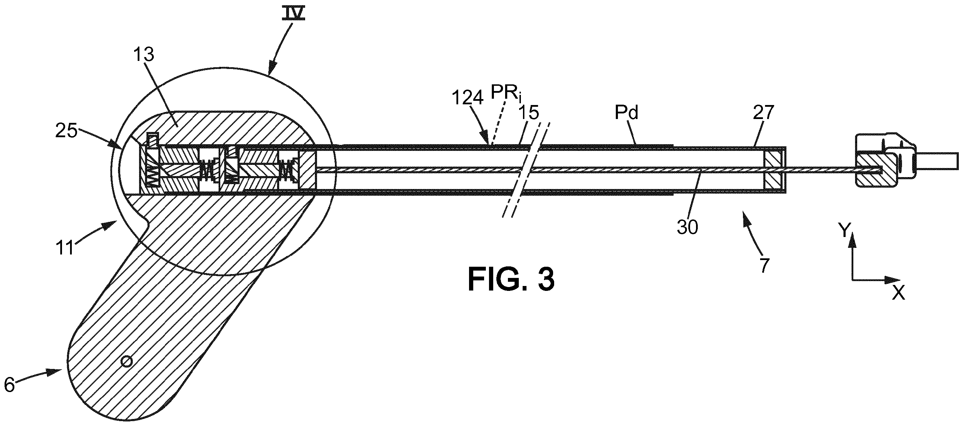

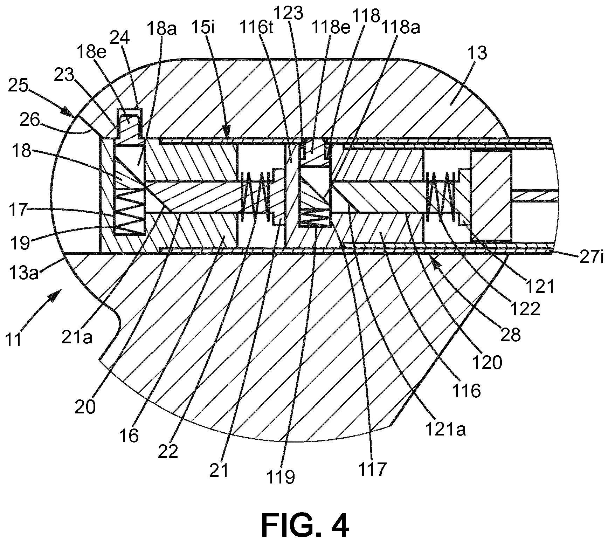

As can be seen in figures 3 and 4, the lower end 15i of the lower tube 15 supports a supporting body 16, for example of plastic, fitting into the lower end 15i of the tube. The supporting body 16 defines an extension channel 17 for a locking pin 18. The extension channel 17 runs in a direction transverse to the storage direction. The locking pin 18 is mounted so as to move in the extension channel 17 in the transverse direction. The locking pin 18 is urged by a spring 19 towards a deployed position in which an end 18e of the locking pin protrudes from the supporting body 16. The locking pin 18 can be moved relative to the supporting body 16, against the bias of the spring 19, in the opposite transverse direction, towards a retracted position where the end 18e of the locking pin 19 does not extend outside the supporting body 16.

The supporting body 16 also defines an actuation channel 20 running transversely to the extension channel 17 and opening into the extension channel 17. For example, the actuation channel 20 runs in the storage direction. An actuator 21 is arranged in the actuation channel. The actuator 21 is mounted in the actuation channel so as to move between a rest position and an actuation position where it extends into the extension channel 17. The actuator 21 is, for example, mounted to be movable between these two positions against the bias of a spring element 22.

The actuator 21 and the locking pin 18 are arranged to have complementary shapes, such that the movement of the actuator 21 from its rest position to its actuation position, against the bias of the spring 22, causes the locking pin 18 to move from its deployed position to the retracted position. Having these shapes be complementary implies for example that the locking pin 18 comprises a beveled back end 18a and that the actuator comprises a beveled front end 21a, such that sliding the actuator in the actuation direction causes the locking pin 18 to slide in the transverse direction.

The lower tube 15 comprises an opening 23 through which the locking pin 18 extends when in the locking position.

The opening 23 is either created in the lower tube 15, or directly in the supporting body 16 secured to the lower tube 15, as represented.

The sleeve 13 comprises a pocket 24 extending in the transverse direction defined above for the extension channel 17. In the usage configuration, the pocket 24 faces said opening 23 of the lower tube 15, and therefore extends the continuity of the extension channel 17. In the active state of the storage locking system, the spring 19 biases the locking pin 18 such that it extends outside the extension channel 17, through the opening 23 and into the pocket 24 into its deployed position, while still extending partially into the extension channel 17. The spring 22 keeps the actuator 21 away from the locking pin 18. The locking pin 18, in its deployed position, keeps the tube 15 locked onto the sleeve 13. The handle 6 is secured to the hood 3.

When the storage locking system is to be placed in an inactive state, the user operates a control which will be described in more detail below. This control causes the actuator 21 to move against the bias of the spring 22 in the actuation channel 20 until the actuator 21 cooperates with the locking pin 18 and moves it, against the bias of the spring 19, from its deployed position to its retracted position where the locking pin 18 no longer cooperates with the sleeve 13. In this configuration, the lower tube 15 is free to slide relative to the sleeve 13 in the storage direction. The handle 6 can thus slide in the storage direction relative to the hood 3 from its usage configuration to the storage position. After an initial movement which shifts the opening 23 away from the pocket 24 in the storage direction, the user is free to release the control. The spring 22 pushes the actuator 21 toward its rest position, where it does not engage with the locking pin 18. The locking pin 18 is pushed by the spring 19 to its deployed position, where it extends through the opening 23 in the lower tube 15, but does not enter the pocket 24. It is prevented from exiting completely by an abutment. In the storage position, the crosspiece 9 abuts against the hood 3. The tubular side assemblies 7 and 8 extend substantially over the main body of the lawnmower. Their front end 7a, 8a extends over the front wheels 5.

To control the operation of the actuator 21, the grip 10 for example may comprise a control button movably mounted on the crosspiece 9 and connected to the actuator 21 by a cable. User actuation of the control button causes movement of the actuator 21, via the cable. The cable preferably runs inside the tubular assembly 7. If there is a storage locking mechanism on each side, it is arranged so that the control button is connected to two cables which each actuate one actuator 21.

The sleeve 13 also comprises an arming means 25 adapted for moving the locking pin 18 from its deployed position to its retracted position, against the bias of the spring 19, during the movement of the handle 6 from its storage configuration to its usage configuration. For example, the sleeve 13 comprises an arming end 13a on the hood side.

This end comprises a slope 26 having a first end at a distance from the central axis of the cylindrical opening of the sleeve 13, and a second end that is continuous with the inner cylindrical opening. Thus, as the handle 6 slides along the storage direction in the usage direction, relative to the sleeve 13, the locking pin 18 is moved by the slope 26, while compressing the spring 19, to a retracted position where it does not extend beyond the opening 23. Said movement can continue until the opening 23 is facing the pocket 24. In this position, the spring 19 pushes the locking pin 18 through the opening 23 into the deployed position inside the pocket 24, and the handle 6 is locked to the hood 3 in the usage configuration.

The above description describes locking/unlocking the handle 6 on the hood 3. This description is provided within a context of a rigid single-piece handle 6. As a variant, as described below, the handle 6 can be retractable and/or adjustable, in which case various buttons in different positions can be used. In other words, the handle 6 can be realized as two separate parts that can move relative to one another in an adjustment direction. In this context, there can be for example a first button for controlling the retraction of the handle on the hood, and a second button for controlling the adjustment of the movable parts of the handle. As a variant, there could be a first button for controlling only the retraction of the handle on the hood, and a second button for controlling both the retraction of the handle on the hood and the adjustment of the movable parts of the handle. In a specific example which will be described in more detail, the adjustment direction is a translational direction that is parallel to the storage direction. However, as a variant, one can have other embodiments, particularly involving rotation about a substantially horizontal adjustment axis.

The handle 6 can thus comprise the lower tube 15 and an upper tube 27 mounted relative to the lower tube 15 in the adjustment direction. An adjustment locking mechanism 28 is also provided which can assume an active state in which it secures the lower 15 and upper 27 tubes together, and an inactive state in which it does not secure them together, such that these tubes 15 and 27 are movable relative to each other in the adjustment direction. It can also be arranged so that the locking mechanism 28 is able to assume its active state in a plurality of different relative positions within an adjustment range, distributed along the adjustment direction. In particular, the adjustment range can include a retracted position (represented in figure 3) in which the upper tube 27 is retracted inside the lower tube 15, and a deployed position P_{d} in which the handle 6 is at its maximum extension. In addition, it can include at least one intermediate adjustment position PRᵢ between the retracted position and the deployed position. The intermediate adjustment positions include a lowest intermediate adjustment position, which is the one closest to the retracted position. The distance between the retracted position and the lowest intermediate position is at least 1.5 times greater, or even at least 3 times greater, than the average difference between the other positions considered adjacent 2 by 2. The other positions are for example equidistant from each other when considering positions adjacent 2 by 2.

In the particular example embodiment described here, the upper tube 27 is arranged to slide inside the lower tube 15. Thus the diameter of the upper tube 27 is slightly less than that of the lower tube 15, to allow it to slide freely inside the lower tube and also to be guided by it when a portion of the upper tube is inside the lower tube 15, in order to appropriately transmit stresses from the grip 10 to the hood 3.

An adjustment locking system is provided, similar to the storage locking system. The adjustment locking system will be described here with reference to the storage locking system, adding 100 to the numerical references for the latter.

As can be seen in figures 3 and 4, the lower end 27i of the upper tube 27 supports a supporting body 116, for example of plastic, fitting into the lower end 27i of the tube. The supporting body 116 defines an extension channel 117 for a locking pin 118. The extension channel 117 runs in a direction transverse to the storage direction. The locking pin 118 is mounted so as to move in the extension channel 117 in the transverse direction. The locking pin 118 is urged by a spring 119 towards a deployed position in which an end 118e of the locking pin protrudes from the supporting body 116. The locking pin 118 can be moved relative to the supporting body 116, against the bias of the spring 119, in the opposite transverse direction, towards a retracted position where the end 118e of the locking pin 118 does not extend outside the supporting body 116, the position visible in figures 3 and 4.

The supporting body 116 also defines an actuation channel 120 running transversely to the extension channel 117 and opening into the extension channel 117. For example, the actuation channel 120 runs in the storage direction. An actuator 121 is arranged in the actuation channel. The actuator 121 is mounted in the actuation channel so as to move between a rest position and an actuation position where it extends into the extension channel 117. The actuator 121 is, for example, mounted to be movable between these two positions against the bias of a spring element 122.

The actuator 121 and the locking pin 118 are arranged to have complementary shapes, such that the movement of the actuator 121 from its rest position to its actuation position, against the bias of the spring 122, causes the locking pin 118 to move from its locking position to the retracted position. Having these shapes be complementary implies for example that the locking pin 118 comprises a beveled back end 118a and that the actuator comprises a beveled front end 121a, such that sliding the actuator in the actuation direction causes the locking pin 118 to slide in the transverse direction.

The upper tube 27 comprises an opening 123 through which the locking pin 118 extends when in the deployed position.

The opening 123 is either created in the upper tube 27, or directly in the supporting body 116 secured to the upper tube 27, as represented.

The lower tube 15 comprises an opening 124 extending in the transverse direction defined above for the extension channel 117. The opening 124 is provided outside the sleeve 13. In a usage configuration, the opening 124 faces said opening 123 of the upper tube 27, and therefore extends continuously with the extension channel 117. In the active state of the storage locking system, the spring 119 biases the locking pin 118 such that it extends outside the extension channel 117, through the opening 123 and through the opening 124 into its deployed position, while still extending partially into the extension channel 117. The spring 122 keeps the actuator 121 away from the locking pin 118. The locking pin 118, in the active state of the storage locking system, keeps the upper tube 27 locked onto the lower tube 15. The upper 27 and lower 15 tubes are locked to each other.

When the storage locking system is to be placed in an inactive state, the user operates a control which will be described in more detail below. This control causes the actuator 121 to move against the bias of the spring 122 in the actuation channel 120 until the actuator 121 cooperates with the locking pin 118 and moves it, against the bias of the spring 119, from its deployed position to its retracted position where the locking pin 118 no longer cooperates with the lower tube 15. In this configuration, the upper tube 27 is free to slide relative to the lower tube 15 in the adjustment direction. After an initial movement which shifts the opening 123 away from the opening 124 in the storage direction, the user is free to release the control. The spring 122 pushes the actuator 121 back to its rest position, where it does not engage with the locking pin 118. The locking pin 118 is pushed by the spring 119 to its locked position, where it extends through the opening 123 in the upper tube 27, but does not enter the opening 124. In particular, it abuts against the inner face of the lower tube 15.

A variable number of openings 124 are arranged in the lower tube 15, depending on the embodiments. In a first embodiment, one opening 124 is provided. In this case, the upper tube 27 and the lower tube 15 can only be locked to each other in one position, corresponding to the usage position. The opening 124 is therefore arranged at a location on the lower tube 15 chosen so that the handle 6 when locked in this position is of a length appropriate for using the lawnmower for mowing. The act of unlocking allows the upper tube 27 to be moved relative to the lower tube 15 in the storage direction, to a retracted position represented in figure 3.

In a second embodiment, there are two openings 124 spaced apart from each other in the adjustment direction. The position in which the handle 6 is at its maximum extension corresponds to the deployed position P_{d} where the opening 123 of the lower tube is facing the opening 124 of the upper tube 27 furthest from the hood 3. The other opening 124 corresponds to an intermediate adjustment position PRi. The openings 124 are arranged at locations on the lower tube 15 which are chosen so that the handle 6 when locked in this position is of a length appropriate for using the lawnmower for mowing, according to user preferences. The act of unlocking allows the upper tube 27 to be moved relative to the lower tube 15 in the storage direction, between the deployed position, the intermediate adjustment position, and the retracted position.

When applicable, there may be several openings 124 corresponding to other adjustment positions between the lowest adjustment position and the deployed position. The distance between the retracted position and the lowest intermediate position is at least 1.5 times greater, or even at least 3 times greater, than the average difference between the other positions when considering positions adjacent 2 by 2. The other positions are, for example, equidistant from each other when considering positions adjacent 2 by 2.

The upper tube 27 can thus slide relative to the lower tube 15 in the storage direction between various adjustment positions, the retracted position, or the deployed position.

One will note that the adjustment locking system can be in its inactive state in the retracted position of the handle.

To control the operation of the actuator 121, the grip 10 for example may comprise a control button 29 movably mounted on the crosspiece 9 and connected to the actuator 121 by a cable 30. User actuation of the control button 29 causes movement of the actuator 121, via the cable 30. The cable 30 preferably runs inside the tubular assembly 7. If there is an adjustment locking mechanism on each side, it is arranged so that the control button 29 is connected to two cables which each actuate an actuator 121.

In one particular embodiment, which is the one represented, a single control is provided for both the storage function and the adjustment function. In this embodiment, the supporting body 116 comprises an actuation head 116t which, in the retracted position of the handle, cooperates with the actuator 21 of the storage locking system.

In this case, the handle storage can take place in the following sequence. The initial position is a position where the storage locking system 11 is in its active state, and the adjustment locking system 28 is in its active state in a handle position appropriate for cutting grass (deployed position, or intermediate adjustment if applicable). The user operates the control button 29 to cause the adjustment locking system 28 to enter its inactive state. In practice, the control button 29 pushes on the cable 30 and pushes the actuator 121 against the action of the spring 122. The actuator 121 cooperates with the locking pin 118 to move the latter against the bias of the spring 119 and cause it to come out the opening 124.

The upper tube 27 is free to move relative to the lower tube 15. The user moves the upper tube 27 in the storage direction. If intermediate adjustment positions exist along this course, the user keeps the control button 29 engaged until beyond the lowest intermediate storage position. The user is then free to release the control button 29. The upper tube 27 moves in the storage direction relative to the lower tube 15, to the position represented in figure 3, where the supporting body 116 controls the passage of the storage locking system from its active state to its inactive state. In particular, the head 116t of the supporting body 116 moves the actuator 21 against the bias of the spring 22. During this movement, the actuator 21 interacts with the locking pin 18 to move the pin away from its engagement with the pocket 24, against the bias of the spring 19. The lower tube 15 is then free to move relative to the sleeve 13. As the user continues to advance the grip 10 in the storage direction, this moves the lower tube to the storage position as indicated in figure 2.

The handle deployment sequence will now be described. The starting position is the position represented in figure 2.

The adjustment locking system 28 is in its inactive state.

The user pulls on the grip 10, which causes the upper tube 27 to move in the adjustment direction relative to the lower tube, to a position where the adjustment locking system 28 can assume an active state (relative position of tubes 15 and 27 corresponding to that they have in the deployed or intermediate adjustment position). As the two tubes are secured, when the user continues his action on the grip, this moves the two tubes together in the deployment direction. The locking pin 18 is armed by the arming means 25, and the storage locking system 11 assumes its active state in the position represented in figure 3.

If the handle has an adjustment function, it can then be adjusted to the preferred grass-cutting position using the adjustment control means.

One will note that, in the sequence described above, the locking of the two tubes to each other can occur before the sleeve 13 in the deployment direction. The passage of the adjustment locking system 18 inside the sleeve 13 can result in an unplanned unlocking of the adjustment locking system. This has no repercussions, however, because continuing the action on the grip 10 in the deployment direction brings the upper tube 27 to another adjustment position relative to the lower tube 15, or to a stop position in which the upper tube 27 is prevented from coming loose from the lower tube 15.

In one embodiment, the lawnmower has a grass collection bag 31. The hood 3 has an aperture, usually at its back face, through which the cut grass is ejected. The collection bag 31 is assembled onto the hood 3 in a detachable manner. The collection bag 31 has a flexible body 32, for example of cloth, having an aperture that faces the aperture in the hood 3.

In one example embodiment, the collection bag 31 can undergo a storage or deployment sequence simultaneously with the handle. In this example, the rear portion of the collection bag 31 is secured to the handle 6, particularly to the lower tube 15. It is arranged in an easily disassembled manner, such as a snap-on solution for example. A detachable attachment means 33 is thus arranged at a first end of a strap 34, the other end being connected to the flexible body 32. A crosspiece 35 may extend between the two attachment means 33, each connected each to a respective tubular side assembly 7, 8.

During the movement of the tubular assembly 7, 8 from its usage configuration to its storage configuration, the crosspiece 35 is moved in the direction of the hood 3 and the collection bag 31 is automatically folded, as can be seen in figure 2. Deployment occurs in the opposite direction.

To empty the collection bag 31, it is detached from the tubular side assemblies 7, 8 on each side of the handle 6, and the front end is detached from the hood 3.

In a second embodiment, the storage direction can be a rotation about a horizontal axis. This embodiment will be described below in reference to the first embodiment, adding 200 to the references for similar objects.

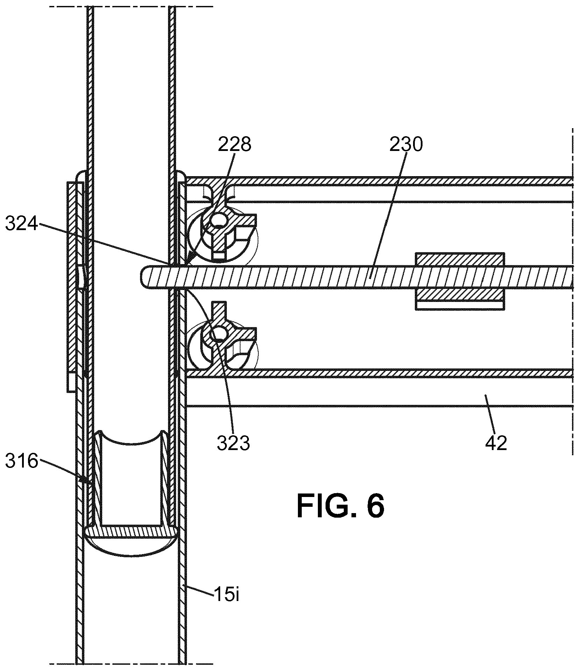

As can be seen in figure 6, the adjustment locking system 228 is external to the handle. It comprises a housing 42 attached to the lower tube 15i. For example, the housing 42 extends between the two lower tubes 15i. The housing 42 supports a rod 230 that is translationally movable relative to the housing in the lateral transverse direction between a retracted position and an active position, the one represented. In the active position, the rod 230 passes through an opening 323 in the lower tube 15i. When the two tubes are relatively positioned, along the storage direction, with the opening 323 facing an opening 324 in the upper tube, the rod 230 passes through these two opening to lock the two tubes to each other. The rod 230 can be moved from this position by sliding it to a position where it has exited the opening 324 and where the lower tube and the upper tube are free to slide relative to one another. A control button (not represented) can be actuated by the user to achieve this movement of the rod 230 against the bias of an elastic member. When the desired adjustment position has been reached, the elastic member pushes the rod 230 back so that it passes through another opening in the upper tube.

The upper tube comprises an actuation cap 316 at its lower end.

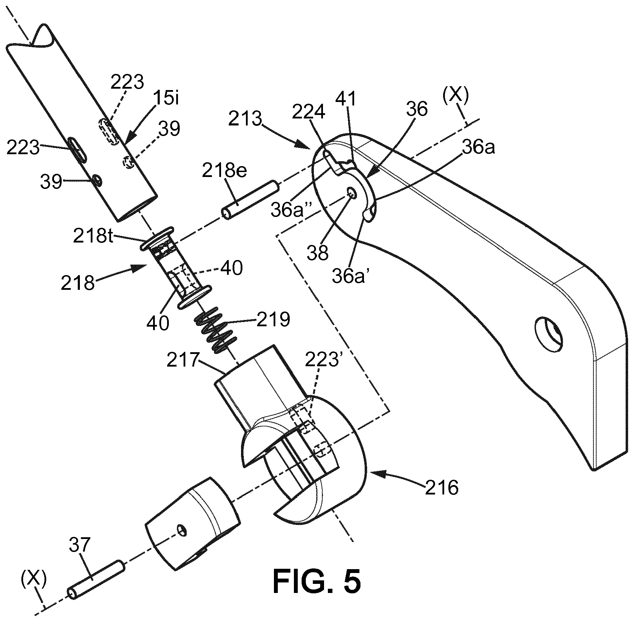

As can be seen in figure 5, the lower end 15i of the lower tube 15 supports a supporting body 216, for example of plastic, nesting inside the lower end 15i of the tube. The supporting body 216 is attached to the hood 3 by means of a dowel pin 37 of axis X traversing the supporting body 216 and mounted in a receiving hole 38 of a plate 213 fixed to the hood 3. Where necessary, the tube 15i also comprises a through-hole 39 of axis X through which the dowel pin 37 passes.

The supporting body 216 defines an extension channel 217 for a locking pin 218. The extension channel 217 runs in a direction transverse to the storage direction, along the axis of the tube 15i. The locking pin 218 is mounted so as to move in the extension channel 217 in the transverse direction. The locking pin 218 is urged by a spring 219 towards a deployed position in which an end 218e of the locking pin protrudes beyond the supporting body 216. The locking pin 218 can be moved relative to the supporting body 216, against the bias of the spring 219, in the opposite transverse direction, towards a retracted position where the end 218e of the locking pin 218 still extends beyond the supporting body 216.

The tube 15i and the supporting body 216 each comprises a respective elongated slot 223 and 223', superimposed atop one another, extending for a distance at least equal to the travel of the locking pin 218 between its deployed and retracted positions.

The end cap 316 of the adjustment locking system and the locking pin 218 are arranged to have complementary shapes, such that movement of the end cap 316 causes the locking pin 218 to move from its deployed position to the retracted position. Having complementary shapes implies for example that the locking pin 218 comprises a portion of its head 218t located in the path of the supporting body 116 of the adjustment locking system.

The locking pin also comprises an elongated slot 40, through which the dowel pin 37 passes, extending for a distance at least equal to the travel of the locking pin 218 between its deployed and retracted positions. The guide means comprises the plate 213 solidly connected to the hood of the lawnmower. The plate 213 comprises a groove 36 having a first portion 36a in the form of an arc of a circle centered on the axis of rotation X, and extending between a first and a second end 36a' and 36a".

The groove 36 also comprises a pocket 224 extending transversely to the arc portion 36a (radially for example), and at one end 36a''. In the usage configuration, the pocket 224 faces said opening 223 of the lower tube 15. In the active state of the storage locking system, the spring 219 biases the locking pin 218 such that the pin in its deployed position extends outside the extension channel 217, through the opening 223 and into the pocket 224, while still extending partially into the extension channel 217. In its deployed position, the locking pin 218 keeps the tube 15 locked onto the plate 213. The handle 6 is secured to the hood 3.

When the storage locking system is to be placed in an inactive state, the user operates a control as in the first embodiment. This control causes the locking pin 218 to move against the bias of the spring 219, from its deployed position to its retracted position where the locking pin 218 no longer cooperates with the pocket 224.

The locking pin 218 is then in the arc portion 36a of the groove 36. In this configuration, the lower tube 15 is free to move rotationally in the storage direction relative to the plate 213. Thus, the handle 6 can pivot in the storage direction about the axis X relative to the hood 3, from its usage configuration to the storage position. After an initial movement which shifts the opening 223 away from the pocket 224 in the storage direction, the user is free to release the control.

During the movement of the handle 6 from its storage configuration to its usage configuration, the locking pin 218 reaches a position opposite the pocket 224. In this position, the spring 219 pushes the locking pin 218 into the deployed position within the pocket 224, and the handle 6 is locked to the hood 3 in the usage configuration.

When necessary, it is arranged so that the orientation of the handle relative to the axis X can be adjusted. For example, a radial notch 41 is arranged in the arc portion 36a, in an intermediate position between its two ends 36a' and 36a", defining an intermediate adjustment position in which the handle extends, relative to the travel plane, at an angle different from the one that exists when the locking pin 218 extends into the pocket 224. This position provides, for example, easier access to the collection bag.

In the embodiments presented, the handle has an upper tube of a smaller diameter than that of the lower tube.

However, the opposite arrangement may be implemented, with the upper tube enveloping the lower tube (and when applicable abutting against the sleeve or the plate in the lowest position).

A sequence of storing or retracting the handle 6 on the hood 3 according to a first example embodiment of the invention will now be described. In this first example embodiment, the deployment/retraction direction is the same as the adjustment direction and forms an angle with the plane of movement of the lawnmower.

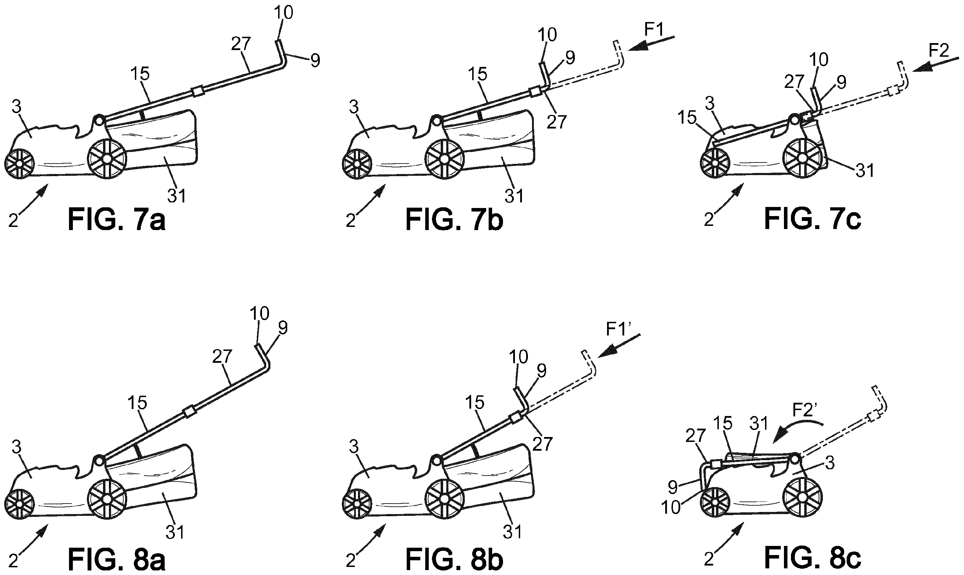

Starting from the position illustrated in figure 7a, corresponding to a handle position appropriate for cutting grass (deployed position, or intermediate adjustment where applicable) in which the storage locking system 11 and the adjustment locking system 28 are in their active state, the user wanting to retract/store the handle 6 on the hood 3 activates the control button 29 to cause the adjustment locking system 28 to change to its inactive state. The user can then slide, in the storage direction, the upper portion of the handle 6 comprising the upper tube(s) 27 relative to the lower portion of the handle 6 comprising the lower tubes 15, by exerting force for example on the tube 10 of the crosspiece 9 in the direction of the arrow F1 visible in figure 7b, and, where applicable, while continuing to activate the control button 29 as explained above. When the upper portion of the handle 6 reaches the position illustrated in figure 7b, where the upper tubes 27 are for the most part retracted inside the lower tubes 15, this causes the storage locking system to change from its active state to its inactive state. By continuing to exert force on the tube 10 in the direction of the arrow F2 visible in figure 7c, the user can then collectively move both the upper portion of the handle 6 and the lower portion of the handle 6, as well as the collection bag 31 attached to the lower portion of the handle 6, relative to the hood 3, until the storage position illustrated in figure 7c is reached, the lawnmower then occupying less volume which facilitates its storage.

Figures 8a to 8c illustrate a sequence of storing or retracting the handle 6 on the hood 3 according to a second example embodiment of the invention. In this second example embodiment, the deployment/retraction direction is different from the adjustment direction. In particular, in this second example embodiment, the adjustment direction is substantially the same as in the first example embodiment illustrated in figures 7a to 7c and forms an angle with the plane of movement of the lawnmower, and the deployment/retraction direction is a rotation about a horizontal axis extending parallel to the plane of movement of the lawnmower.

Starting from the position illustrated in figure 8a, corresponding to a handle position appropriate for cutting grass (deployed position, or intermediate adjustment where applicable), in which the storage locking system 11 and the adjustment locking system 28 are in their active state, the user wanting to retract/store the handle 6 on the hood 3 activates the control button 29 to cause the adjustment locking system 28 to change to its inactive state. The user can then slide, in the storage direction, the upper portion of the handle 6 comprising the upper tube(s) 27 relative to the lower portion of the handle 6 comprising the lower tubes 15, by exerting force for example on the tube 10 of the crosspiece 9 in the direction of the arrow F1' visible in figure 8b, and, where applicable, while continuing to activate the control button 29 as explained above. When the upper portion of the handle 6 reaches the position illustrated in figure 8b, where the upper tubes 27 are for the most part retracted inside the lower tubes 15, this causes the storage locking system to change from its active state to its inactive state.

The user then collectively pivots, relative to the hood 3, the top portion of the handle 6 and the bottom portion of the handle 6, as well as the collection bag 31 attached to the lower portion of the handle 6, about the horizontal axis of rotation in the direction of the arrow F2' until the storage position is reached as illustrated in figure 8c, where the top and bottom portions of the handle 6 as well as the collection bag 31 are folded onto the hood 2, the lawnmower then occupying less volume which facilitates its storage.

## Claims

1. Lawnmower comprising a movable main body (2) comprising a hood (3), and a handle (6) that is deployable in a deployment direction relative to the main body between a storage configuration and a usage configuration, a storage locking system (11) which can be alternately placed in an active state in which it prevents the storage of the handle (6) relative to the main body (2) and an inactive state in which it allows such storage, and a user operable storage control system (12, 116t) for placing the storage locking system in its inactive state from its active state; wherein said handle (6) comprises a lower portion (15) and an upper portion (27) that is movable relative to the lower portion (15) in an adjustment direction, an adjustment locking system (28, 228) adapted for alternately being placed in an active state in which it secures the lower (15) and upper (27) portions to one another in an adjustment position, and an inactive state in which the lower (15) and upper (27) portions are not secured to one another, and a user operable adjustment control system (12) for placing the adjustment locking system (28) in its inactive state from its active state; **characterized in that** the user operable storage control system comprises the user operable adjustment control system (12) and an actuation part (116t) of the upper portion (27) of the handle (6), such that a single control is provided for both the user operable storage control system and the user operable adjustment control system.

2. Lawnmower according to claim 1, wherein the adjustment locking system (28, 228) is adapted for being in an active state in a plurality of different adjustment positions.

3. Lawnmower according to either of claims 1 or 2, wherein an adjustment range comprises a retracted position in which the upper portion (27) is retracted inside the lower portion (15), a deployed position in which the upper portion (27) is almost entirely outside the lower portion (15), and at least one intermediate adjustment position, said at least one intermediate adjustment position comprising a lowest intermediate adjustment position, closest to the retracted position, and wherein the distance between the retracted position and the lowest intermediate position is at least 1.5 times greater than an average difference between the other positions considered adjacent 2 by 2.

4. Lawnmower according to any of claims 1 to 3, wherein the user operable adjustment control system (12) comprises a control button (29) that is movable on a base (10) and is connected to a transmission element (30, 230) extending to an actuator (121) cooperating with the adjustment locking system (28, 228).

5. Lawnmower according to any of claims 1 to 4, comprising one of the following features:
- said deployment direction is the same as the adjustment direction;
- the deployment and adjustment directions are different.

6. Lawnmower according to any of claims 1 to 5, wherein the actuation part (116t) of the upper portion (27) of the handle comprises an actuation head, arranged at the distal end of the upper portion (27) of the handle, adapted for actuating the storage locking system (11).

7. Lawnmower according to any of claims 1 to 6, wherein at least one and preferably each locking system (11,28) comprises a supporting body (16,116,216) mounted in a handle portion end (15,27), the supporting body (16,116,216) defining an extension channel (17,117,217) for a locking pin (18,118,218) extending in a direction transverse to the storage direction, a locking pin (18,118,218) mounted so as to be movably biased by an elastic member (19,119,219) in the extension channel (17,117,217), each user operable control system comprising a user operable actuator (21,121,316) that cooperates with the locking pin (18,118,218) in order to move the locking pin (18,118,218) in the transverse direction against the bias of the elastic member (19,119,219);
And comprising one or more of the following features:
- the supporting body (116) of the adjustment locking system (28) comprises a distal end (116t) adapted for actuating the user operable storage control system;
- the supporting body (16,116,216) defines an actuation channel (20,120) for receiving the actuator (21,121), extending in the storage direction and opening into the extension channel (17,117), the actuator (21,121) being mounted so as to be movable within the actuation channel (20,120), wherein the distal end (116t) of the supporting body (116) of the adjustment locking system (28) is adapted for moving the actuator (21) of the user operable storage control system.

8. Lawnmower according to any of claims 1 to 7, wherein the hood comprises a guide means (13,213) cooperating with the lower portion (15) of the handle (6) to guide the storage of the handle relative to the main body in a storage direction;
and optionally comprising one of the following features:
- the guide means is a guide sleeve (13) adapted for guiding the storage in a translational storage direction;
- the hood (3) comprises a guide plate cooperating with the lower portion (15) of the handle (6) to guide the storage of the handle (6) relative to the main body in a rotational storage direction.

9. Lawnmower according to claim 8, further comprising one or more of the following features:
- the guide means (13) is located at the back of the hood (3), and the hood comprises a front support region, and the handle (6) rests on the front support region in the storage configuration;
- the guide means (13,213) is secured to the hood (3) and fixed to the hood (3).

10. Lawnmower according to any of claims 1 to 9, wherein the storage locking system (11) comprises a pocket (24, 224) of the hood adapted for cooperating with a locking pin (18,218) carried by the handle (6) in the active state of the storage locking system (11);
and optionally wherein the hood comprises an actuation surface (26) upstream of the pocket (24) in the deployment direction and adapted for moving the locking pin (18) from a deployed position to a retracted position against the action of an elastic biasing member (19), the elastic biasing member (19) urging the locking pin (18) towards its deployed position in the usage configuration of the handle (6).

11. Lawnmower according to any of claims 1 to 10, wherein the handle comprises a tube (15) extending in the storage direction in the usage configuration.

12. Lawnmower according to any of claims 1 to 11, wherein the main body (2) comprises at least three non-aligned points of support (5) defining a plane of movement;
and optionally wherein the storage direction forms an angle of between 20° and 70° relative to the plane of movement.

13. Lawnmower according to any of claims 1 to 12, wherein the hood (3) has an aperture for discharging cut grass, said lawnmower additionally comprising a collection bag (31) having an inlet aperture, the inlet aperture facing the aperture for discharging cut grass in the usage configuration of the handle (6).

14. Lawnmower according to claim 13, and further comprising one or more of the following features:
- the collection bag (31) is attached to the lower portion (15) of the handle;
- the collection bag (31) is deployable between a deployed state in which it can receive a quantity of cut grass and a folded state in which it cannot receive a quantity of cut grass, and the collection bag (31) is mounted onto the handle (6), the placement of the handle (6) in its storage configuration from its usage configuration causing the collection bag (31) to change from its deployed state to its folded state.

15. Lawnmower according to any of claims 1 to 14, wherein the handle (6) comprises a grip (10), said grip abutting against the hood (3) in the storage configuration.

## Patentansprüche

1. Rasenmäher, umfassend einen beweglichen Hauptkörper (2), der eine Haube (3) umfasst, und eine Griffstange (6), die in einer Ausbringungsrichtung bezüglich des Hauptkörpers zwischen einer Verstauungskonfiguration und einer Gebrauchskonfiguration ausbringbar ist, ein Verstauungsverriegelungssystem (11), das abwechselnd in einen aktiven Zustand, in dem es das Verstauen der Griffstange (6) bezüglich des Hauptkörpers (2) verhindert, und einen inaktiven Zustand, in dem es solch ein Verstauen gestattet, platziert werden kann, und ein von einem Benutzer bedienbares Verstauungssteuersystem (12, 116t) zum Platzieren des Verstauungsverriegelungssystems aus seinem aktiven Zustand in seinen inaktiven Zustand; wobei die Griffstange (6) einen unteren Abschnitt (15) und einen oberen Abschnitt (27), der bezüglich des unteren Abschnitts (15) in einer Einstellungsrichtung beweglich ist, ein Einstellungsverriegelungssystem (28, 228), das dazu ausgeführt ist, abwechselnd in einen aktiven Zustand, in dem es den unteren (15) und den oberen (27) Abschnitt in einer Einstellungsposition fest miteinander verbindet, und einen inaktiven Zustand, in dem der untere (15) und der obere (27) Abschnitt nicht fest miteinander verbunden sind, platziert zu werden, und ein von einem Benutzer bedienbares Einstellungssteuersystem (12) zum Platzieren des Einstellungsverriegelungssystems (28) aus seinem aktiven Zustand in seinen inaktiven Zustand, umfasst; **dadurch gekennzeichnet, dass** das von dem Benutzer bedienbare Verstauungssteuersystem das von dem Benutzer bedienbare Einstellungssteuersystem (12) und einen Betätigungsteil (116t) des oberen Abschnitts (27) der Griffstange (6) umfasst, so dass eine einzige Bedienung sowohl für das von dem Benutzer bedienbare Verstauungssteuersystem als auch das von dem Benutzer bedienbare Einstellungssteuersystem bereitgestellt wird.

2. Rasenmäher nach Anspruch 1, wobei das Einstellungsverriegelungssystem (28, 228) dahingehend ausgeführt ist, sich in mehreren verschiedenen Einstellungspositionen in einem aktiven Zustand zu befinden.

3. Rasenmäher nach Anspruch 1 oder 2, wobei ein Einstellungsbereich eine zurückgezogene Position, in der der obere Abschnitt (27) in den unteren Abschnitt (15) zurückgezogen ist, eine ausgebrachte Position, in der sich der oberen Abschnitt (27) fast vollständig außerhalb des unteren Abschnitts (15) befindet, und mindestens eine Zwischeneinstellungsposition umfasst, wobei die mindestens eine Zwischeneinstellungsposition eine unterste Zwischeneinstellungsposition, die sich am nächsten zu der zurückgezogenen Position befindet, umfasst, und wobei der Abstand zwischen der zurückgezogenen Position und der untersten Zwischenposition um mindestens das 1,5-Fache größer ist als eine durchschnittliche Diskrepanz zwischen den anderen Positionen, die als paarweise benachbart betrachtet werden.

4. Rasenmäher nach einem der Ansprüche 1 bis 3, wobei das von dem Benutzer bedienbare Einstellungssteuersystem (12) einen Bedienungsknopf (29) umfasst, der auf einer Basis (10) beweglich ist und mit einem Übertragungselement (30, 230) verbunden ist, das sich zu einem mit dem Einstellungsverriegelungssystem (28, 228) zusammenwirkenden Aktuator (121) erstreckt.

5. Rasenmäher nach einem der Ansprüche 1 bis 4, der eines der folgenden Merkmale umfasst:
- die Ausbringungsrichtung ist gleich der Einstellungsrichtung;
- die Ausbringungs- und die Einstellungsrichtung sind verschieden.

6. Rasenmäher nach einem der Ansprüche 1 bis 5, wobei der Betätigungsteil (116t) des oberen Abschnitts (27) der Griffstange einen Betätigungskopf umfasst, der am distalen Ende des oberen Abschnitts (27) der Griffstange angeordnet ist und zum Betätigen des Verstauungsverriegelungssystems (11) ausgeführt ist.

7. Rasenmäher nach einem der Ansprüche 1 bis 6, wobei mindestens ein und vorzugsweise jedes Verriegelungssystem (11, 28) einen Stützkörper (16, 116, 216), der in einem Griffabschnittsende (15, 27) angebracht ist, wobei der Stützkörper (16, 116, 216) einen Verlängerungskanal (17, 117, 217) für einen Verriegelungsstift (18, 118, 228) definiert, der sich in einer quer zu der Verstauungsrichtung verlaufenden Richtung erstreckt, einen Verriegelungsstift (18, 118, 218), der so angebracht ist, dass er durch ein elastisches Glied (19, 119, 219) in dem Verlängerungskanal (17, 117, 217) beweglich vorbelastet wird, umfasst, wobei jedes von dem Benutzer bedienbare Steuersystem einen von dem Benutzer bedienbaren Aktuator (21, 121, 316) umfasst, der mit dem Verriegelungsstift (18, 118, 218) dahingehend zusammenwirkt, den Verriegelungsstift (18, 118, 218) gegen die Vorbelastung des elastischen Glieds (19, 119, 219) in die Querrichtung zu bewegen;
und umfassend eines oder mehrere der folgenden Merkmale:
- der Stützkörper (116) des Einstellungsverriegelungssystems (28) umfasst ein distales Ende (116t), das zum Betätigen des von dem Benutzer bedienbaren Verstauungssteuersystems ausgeführt ist;
- der Stützkörper (16, 116, 216) definiert einen Betätigungskanal (20, 120) zur Aufnahme des Aktuators (21, 121), der sich in der Verstauungsrichtung erstreckt und in den Verlängerungskanal (17, 117) mündet, wobei der Aktuator (21, 212) so angebracht ist, dass er in dem Bedienungskanal (20, 120) beweglich ist, wobei das distale Ende (116t) des Stützkörpers (116) des Einstellungsverriegelungssystems (28) zum Bewegen des Aktuators (21) des von dem Benutzer bedienbaren Verstauungssteuersystems ausgeführt ist.

8. Rasenmäher nach einem der Ansprüche 1 bis 7, wobei die Haube ein Führungsmittel (13, 213) umfasst, das mit dem unteren Abschnitt (15) der Griffstange (6) dahingehend zusammenwirkt, das Verstauen der Griffstange bezüglich des Hauptkörpers in einer Verstauungsrichtung zu führen;
und wahlweise umfassend eines der folgenden Merkmale:
- das Führungsmittel ist eine Führungshülse (13), die zum Führen des Verstauens in einer translatorischen Verstauungsrichtung ausgeführt ist;
- die Haube (3) umfasst eine Führungsplatte, die mit dem unteren Abschnitt (15) der Griffstange (6) dahingehend zusammenwirkt, das Verstauen der Griffstange (6) bezüglich des Hauptkörpers in einer Drehverstauungsrichtung zu führen.

9. Rasenmäher nach Anspruch 8, ferner umfassend eines oder mehrere der folgenden Merkmale:
- das Führungsmittel (13) befindet sich an der Rückseite der Haube (3), und die Haube umfasst einen vorderen Stützbereich, und die Griffstange (6) liegt in der Verstauungskonfiguration auf dem vorderen Stützbereich auf;
- das Führungsmittel (13, 213) ist fest mit der Haube (3) verbunden und an der Haube (3) fixiert.

10. Rasenmäher nach einem der Ansprüche 1 bis 9 wobei das Verstauungsverriegelungssystem (11) eine Tasche (24, 224) der Haube umfasst, die dazu ausgeführt ist, im aktiven Zustand des Verstauungsverriegelungssystems (11) mit einem von der Griffstange (6) getragenen Verriegelungsstift (18, 218) zusammenzuwirken; und wahlweise wobei die Haube eine Betätigungsfläche (26) stromaufwärts der Tasche (24) in der Ausbringungsrichtung umfasst, die dazu ausgeführt ist, den Verriegelungsstift (18) gegen die Wirkung eines elastischen Vorbelastungsglieds (19) aus einer ausgebrachten Position in eine zurückgezogene Position zu bewegen, wobei das elastische Vorbelastungsglied (19) den Verriegelungsstift (18) in der Gebrauchskonfiguration der Griffstange (6) zu seiner ausgebrachten Position vorbelastet.

11. Rasenmäher nach einem der Ansprüche 1 bis 10, wobei die Griffstange ein Rohr (15) umfasst, das sich in der Gebrauchskonfiguration in der Verstauungsrichtung erstreckt.

12. Rasenmäher nach einem der Ansprüche 1 bis 11, wobei der Hauptkörper (2) mindestens drei nicht aufeinander ausgerichtete Stützpunkte (5) umfasst, die eine Bewegungsebene definieren; und wahlweise wobei die Verstauungsrichtung einen Winkel von zwischen 20° und 70° bezüglich der Bewegungsebene bildet.

13. Rasenmäher nach einem der Ansprüche 1 bis 12, wobei die Haube (3) eine Öffnung zum Abführen von geschnittenem Gras aufweist, wobei der Rasenmäher darüber hinaus einen Fangsack (31) umfasst, der eine Einlassöffnung aufweist, wobei die Einlassöffnung in der Gebrauchskonfiguration der Griffstange (6) zu der Öffnung zum Abführen von geschnittenem Gras weist.

14. Rasenmäher nach Anspruch 13, der ferner eines oder mehrere der folgenden Merkmale umfasst.
- der Fangsack (31) ist an dem unteren Abschnitt (15) der Griffstange angebracht;
- der Fangsack (31) ist zwischen einem ausgebrachten Zustand, in dem er eine Menge an geschnittenem Gras aufnehmen kann, und einem gefalteten Zustand, in dem er keine Menge an geschnittenem Gras aufnehmen kann, ausbringbar, und der Fangsack (31) ist an der Griffstange (6) angebracht, wobei das Platzieren der Griffstange (6) aus ihrer Gebrauchskonfiguration in ihre Verstauungskonfiguration bewirkt, dass der Fangsack (31) aus seinem ausgebrachten Zustand in seinen gefalteten Zustand gebracht wird.

15. Rasenmäher nach einem der Ansprüche 1 bis 14, wobei die Griffstange (6) einen Griff (10) umfasst, wobei der Griff in der Verstauungskonfiguration an der Haube (3) anliegt.

## Revendications

1. Tondeuse comprenant un corps principal mobile (2) comprenant un capot (3), et une poignée (6) qui est déployable dans une direction de déploiement par rapport au corps principal entre une configuration de rangement et une configuration d'utilisation, un système de verrouillage de rangement (11) qui peut être alternativement placé dans un état actif dans lequel il empêche le rangement de la poignée (6) par rapport au corps principal (2) et un état inactif dans lequel il permet un tel rangement, et un système de commande de rangement manipulable par l'utilisateur (12, 116t) pour placer le système de verrouillage de rangement dans son état inactif depuis son état actif ; dans laquelle ladite poignée (6) comprend une partie inférieure (15) et une partie supérieure (27) qui est mobile par rapport à la partie inférieure (15) dans une direction de réglage, un système de verrouillage de réglage (28, 228) adapté pour être alternativement placé dans un état actif dans lequel il attache les parties inférieure (15) et supérieure (27) l'une à l'autre dans une position de réglage, et un état inactif dans lequel les parties inférieure (15) et supérieure (27) ne sont pas attachées l'une à l'autre, et un système de commande de réglage manipulable par l'utilisateur (12) pour placer le système de verrouillage de réglage (28) dans son état inactif depuis son état actif ; **caractérisée en ce que** le système de commande de rangement manipulable par l'utilisateur comprend le système de commande de réglage manipulable par l'utilisateur (12) et une partie d'actionnement (116t) de la partie supérieure (27) de la poignée (6), de sorte qu'une commande unique soit fournie à la fois pour le système de commande de rangement manipulable par l'utilisateur et le système de commande de réglage manipulable par l'utilisateur.

2. Tondeuse selon la revendication 1, dans laquelle le système de verrouillage de réglage (28, 228) est adapté pour être dans un état actif dans une pluralité de positions de réglage différentes.

3. Tondeuse selon l'une ou l'autre des revendications 1 ou 2, dans laquelle une plage de réglage comprend une position rétractée dans laquelle la partie supérieure (27) est rétractée à l'intérieur de la partie inférieure (15), une position déployée dans laquelle la partie supérieure (27) est presque entièrement en dehors de la partie inférieure (15), et au moins une position de réglage intermédiaire, ladite au moins une position de réglage intermédiaire comprenant une position de réglage intermédiaire la plus basse, la plus proche de la position rétractée, et dans laquelle la distance entre la position rétractée et la position intermédiaire la plus basse est au moins 1,5 fois supérieure à une différence moyenne entre les autres positions considérées adjacentes 2 par 2.

4. Tondeuse selon l'une quelconque des revendications 1 à 3, dans laquelle le système de commande de réglage manipulable par l'utilisateur (12) comprend un bouton de commande (29) qui est mobile sur une base (10) et est connecté à un élément de transmission (30, 230) s'étendant jusqu'à un actionneur (121) coopérant avec le système de verrouillage de réglage (28, 228).

5. Tondeuse selon l'une quelconque des revendications 1 à 4, comprenant l'une des caractéristiques suivantes :
- ladite direction de déploiement est la même que la direction de réglage ;
- les directions de déploiement et de réglage sont différentes.

6. Tondeuse selon l'une quelconque des revendications 1 à 5, dans laquelle la partie d'actionnement (116t) de la partie supérieure (27) de la poignée comprend une tête d'actionnement, agencée à l'extrémité distale de la partie supérieure (27) de la poignée, adaptée pour actionner le système de verrouillage de rangement (11).

7. Tondeuse selon l'une quelconque des revendications 1 à 6, dans laquelle au moins un et de préférence chaque système de verrouillage (11, 28) comprend un corps de support (16, 116, 216) monté dans une extrémité de partie de poignée (15, 27), le corps de support (16, 116, 216) définissant un canal d'extension (17, 117, 217) pour une goupille de verrouillage (18, 118, 218) s'étendant dans une direction transversale à la direction de rangement, une goupille de verrouillage (18, 118, 218) montée de manière à être sollicitée de manière mobile par un élément élastique (19, 119, 219) dans le canal d'extension (17, 117, 217), chaque système de commande manipulable par l'utilisateur comprenant un actionneur manipulable par l'utilisateur (21, 121, 316) qui coopère avec la goupille de verrouillage (18, 118, 218) afin de déplacer la goupille de verrouillage (18, 118, 218) dans la direction transversale contre la sollicitation de l'élément élastique (19, 119, 219) ;
et comprenant une ou plusieurs des caractéristiques suivantes :
- le corps de support (116) du système de verrouillage de réglage (28) comprend une extrémité distale (116t) adaptée pour actionner le système de commande de rangement manipulable par l'utilisateur ;
- le corps de support (16, 116, 216) définit un canal d'actionnement (20, 120) pour recevoir l'actionneur (21, 121), s'étendant dans la direction de rangement et s'ouvrant dans le canal d'extension (17, 117), l'actionneur (21, 121) étant monté de manière à être mobile dans le canal d'actionnement (20, 120), dans laquelle l'extrémité distale (116t) du corps de support (116) du système de verrouillage de réglage (28) est adaptée pour déplacer l'actionneur (21) du système de commande de rangement manipulable par l'utilisateur.

8. Tondeuse selon l'une quelconque des revendications 1 à 7, dans laquelle le capot comprend un moyen de guidage (13, 213) coopérant avec la partie inférieure (15) de la poignée (6) pour guider le rangement de la poignée par rapport au corps principal dans une direction de rangement ;
et comprenant facultativement une des caractéristiques suivantes :
- le moyen de guidage est un manchon de guidage (13) adapté pour guider le rangement dans une direction de rangement translationnelle ;
- le capot (3) comprend une plaque de guidage coopérant avec la partie inférieure (15) de la poignée (6) pour guider le rangement de la poignée (6) par rapport au corps principal dans une direction de rangement rotationnelle.

9. Tondeuse selon la revendication 8, comprenant en outre une ou plusieurs des caractéristiques suivantes :
- le moyen de guidage (13) est situé au dos du capot (3), et le capot comprend une région de support avant, et la poignée (6) repose sur la région de support avant dans la configuration de rangement ;
- le moyen de guidage (13, 213) est attaché au capot (3) et fixé au capot (3).

10. Tondeuse selon l'une quelconque des revendications 1 à 9, dans laquelle le système de verrouillage de rangement (11) comprend une poche (24, 224) du capot adaptée pour coopérer avec une goupille de verrouillage (18, 218) portée par la poignée (6) dans l'état actif du système de verrouillage de rangement (11) ;
et facultativement dans laquelle le capot comprend une surface d'actionnement (26) en amont de la poche (24) dans la direction de déploiement et adaptée pour déplacer la goupille de verrouillage (18) depuis une position déployée à une position rétractée contre l'action d'un élément de sollicitation élastique (19), l'élément de sollicitation élastique (19) amenant la goupille de verrouillage (18) vers sa position déployée dans la configuration d'utilisation de la poignée (6).

11. Tondeuse selon l'une quelconque des revendications 1 à 10, dans laquelle la poignée comprend un tube (15) s'étendant dans la direction de rangement dans la configuration d'utilisation.

12. Tondeuse selon l'une quelconque des revendications 1 à 11, dans laquelle le corps principal (2) comprend au moins trois points de support (5) non alignés définissant un plan de déplacement ;
et facultativement dans laquelle la direction de rangement forme un angle situé entre 20 ° et 70 ° par rapport au plan de déplacement.

13. Tondeuse selon l'une quelconque des revendications 1 à 12, dans laquelle le capot (3) a une ouverture pour évacuer l'herbe coupée, ladite tondeuse comprenant en plus un sac de collecte (31) ayant une ouverture d'entrée, l'ouverture d'entrée faisant face à l'ouverture pour évacuer l'herbe coupée dans la configuration d'utilisation de la poignée (6).

14. Tondeuse selon la revendication 13, et comprenant en outre une ou plusieurs des caractéristiques suivantes :
- le sac de collecte (31) est attaché à la partie inférieure (15) de la poignée ;
- le sac de collecte (31) est déployable entre un état déployé dans lequel il peut recevoir une quantité d'herbe coupée et un état replié dans lequel il ne peut pas recevoir une quantité d'herbe coupée, et le sac de collecte (31) est monté sur la poignée (6), le placement de la poignée (6) dans sa configuration de rangement depuis sa configuration d'utilisation amenant le sac de collecte (31) à passer de son état déployé à son état replié.

15. Tondeuse selon l'une quelconque des revendications 1 à 14, dans laquelle la poignée (6) comprend une zone de préhension (10), ladite zone de préhension venant en butée contre le capot (3) dans la configuration de rangement.
